Europäisches Patentamt

European Patent Office

Office européen des brevets

(19)

(11) Veröffentlichungsnummer: **0 491 213 A2**

(12) **EUROPÄISCHE PATENTANMELDUNG**

(21) Anmeldenummer: **91120671.2**

(51) Int. Cl.5: **F16K 1/14**

(22) Anmeldetag: **02.12.91**

(30) Priorität: **18.12.90 DE 9017079 U**

(43) Veröffentlichungstag der Anmeldung:
**24.06.92 Patentblatt 92/26**

(84) Benannte Vertragsstaaten:
**BE DE ES FR GB IT NL SE**

(71) Anmelder: **MESSER GRIESHEIM GMBH**
**Hanauer Landstrasse 330**
**W-6000 Frankfurt/Main 1(DE)**

(72) Erfinder: **Linz, Dieter**
**An der Trinkhalle 11**
**W-6232 Bad Soden(DE)**

(54) **Absperrventil.**

(57) Die Erfindung betrifft ein Absperrventil, insbesondere für einen Druckregler für Anlagen zur thermischen Bearbeitung von Werkstücken, mit einem Gehäusegrundkörper, einem Verstellelement (12) das mit einer Spindel, die einen Schließkörper trägt, verbunden ist, wobei die Spindel (13) aus einem Kunststoff und der Schließkörper (14) aus einem metallischen Werkstoff besteht.

Fig. 2

Die Erfindung betrifft ein Absperrventil, insbesondere für einen Druckregler für Anlagen zur thermischen Bearbeitung von Werkstücken mit einem Gehäusegrundkörper, einem Verstellelement und einer Spindel, die einen Schließkörper trägt.

Bei der thermischen Bearbeitung von Werkstücken kommt es bei Produktionsunterbrechungen vor, daß die Brenn- und/oder Schneidgase abgesperrt werden müssen. Die Gase werden in der Regel Flaschen bzw. Flaschenbatterien entnommen, denen ein Flaschenabsperrventil und diesem nachgeschaltet ein Flaschendruckregler zur Regelung des Betriebsmittels Gas zugeordnet ist. Wird bei längeren Unterbrechungen das Flaschenventil geschlossen, so ist eine Entspannung des Druckreglers erforderlich, der am Beginn des Bearbeitungsprozesses neu eingestellt werden muß. Wird dahingehend dem Druckregler ein Absperrventil zugeordnet, kann der Gasstrom zu dem Verbraucher hinter dem Druckregler abgesperrt werden; bei einem derartigen Vorgehen muß dieser nicht entspannt werden.

Aufgabe der Erfindung ist es, ein kostengünstiges Absperrventil insbesondere für einen Druckregler zu schaffen, das einfach zu montieren ist.

Diese Aufgabe wird erfindungsgemäß durch die kennzeichnenden Merkmale des Anspruches 1 gelöst.

Durch die Erfindung wird vorteilhaft eine kostengünstige Spindel für ein Absperrventil geschaffen, in der der metallische Schließkörper einfach zu befestigen ist. Hinzu kommt, daß das Öffnen und Schließen des Absperrventiles ohne Drehbewegung der Spindel erfolgen kann, wodurch das Entstehen von Partikeln vermieden wird. Vorteilhaft weist die Spindel aus Kunststoff an ihrem einen Ende eine elastische Aufnahme auf, in die der als Kugel ausgebildete Schließkörper durch Dehnen der Aufnahme angeordnet werden kann. Durch die Elastizität der Aufnahme geht diese nach Aufnahme der Kugel in ihre Ausgangsform zurück und hindert damit die Kugel am Herausfallen aus ihrem Hohlraum. Hierzu weisen die elastischen Wände der Aufnahme eine nach innen zu dem Hohlraum gerichteten Vorsprung auf, der an der Oberfläche der Kugel zur Anlage gebracht wird. Die Kugel ist über Ihre Mitte hinaus diesem Hohlraum angeordnet. Die Montage der Kugel erfolgt vorteilhaft dadurch, daß sie auf dem Ventilsitz angeordnet wird und die Spindel mit dem Verstellelement zusammen auf den Ventilsitz gedrückt wird. Hierbei erfolgt eine automatische Montage des Schließkörpers.

Das entgegengesetzte Ende der Spindel weist ein geschlitztes elastisches Teil auf, daß durch Krafteinwirkung zusammengedrückt werden kann. Hierdurch wird dessen Umfang verkleinert. Entfällt die Krafteinwirkung, nimmt dieses Verbindungsteil automatisch seine Ausgangslage wieder ein. Das Verbindungsteil dient zur Befestigung an dem Verstellelement. Hierzu wird es mit verkleinertem Umfang durch eine Öffnung des Verstellelementes geführt. Nach der Durchführung nimmt es seine vergrößerte Ausgangslage ein und wird über seitlich von ihm abstehende Halteflächen am Herausrutschen aus der Öffnung des Verstellelementes gehindert. Das Verstellelement ist im wesentlichen ein topfförmiger Körper, der sich über eine Gewindeverbindung entlang einer Wand des Gehäusegrundkörpers verschiebt und damit die Spindel mit dem Schließkörper auf den Ventilsitz zu oder von diesem Ventilsitz wegbewegt. An seiner zum Gehäusegrundkörper gerichteten Wand weist das Verstellelement eine Dichtlippe auf, die das Bewegungsgewinde vor Verunreinigungen schützt. Die Dichtlippe steht in Kontakt mit der Wand des Gehäusegrundkörpers.

Vorteilhafte Weiterbildungen der Erfindung sind in den Unteransprüchen angegeben.

Ein Ausführungsbeispiel der Erfindung ist in der Zeichnung dargestellt und wird im folgenden näher beschrieben:

Es zeigen

Fig. 1     einen Druckregler mit dem Absperrventil nach der Erfindung

Fig. 2     eine Vergrößerung der Spindel mit dem Schließkörper und dem Halteteil

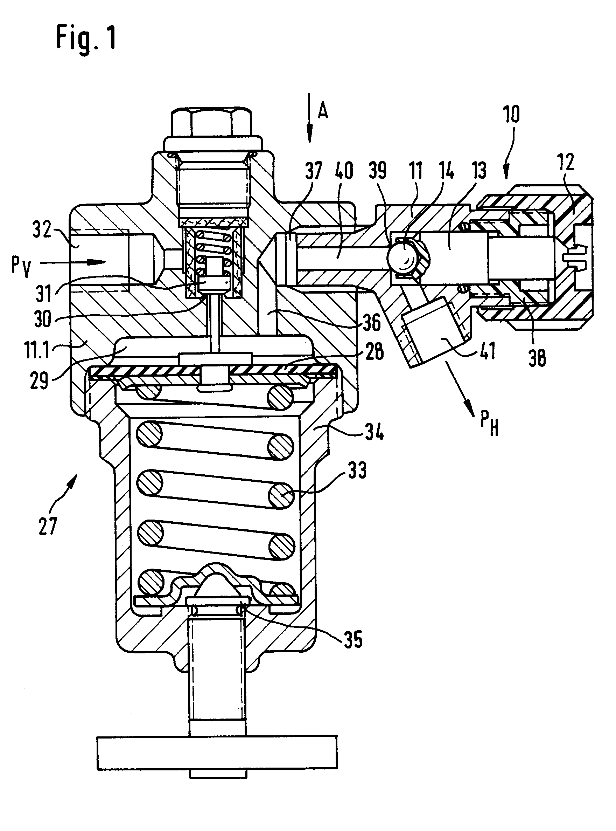

In der Fig. 1 ist ein an sich bekannter Druckregler 27 dargestellt, der im wesentlichen aus einem Gehäusegrundkörper 11.1 besteht, der zusammen mit einer federbelasteten Niederdruckmembran 28, einen Niederdruckraum 29 begrenzt und in dem ein einen Ventilsitz 30 und einen beweglichen Ventilkörper 31 aufweisendes Ventil angeordnet ist, dessen Eingang mit einer Hochdruckleitung 32 und dessen Ausgang mit dem Niederdruckraum 29 in Verbindung steht. Die an sich bekannte Stellfeder für die Niederdruckmembran 28 ist mit 33, das entsprechende Federgehäuse mit 34 und das Einstellelement mit 35 bezeichnet. Der Niederdruckraum ist über eine Verbindungsbohrung 36 mit der Niederdruckleitung 37 verbunden, in der der Gehäusegrundkörper 11 für das Absperrventil 10 angeordnet ist.

Gemäß einer anderen, nicht näher dargestellten Ausführungsvariante ist das Absperrventil in dem Gehäusegrundkörper 11.1 des Druckreglers integriert.

Das Absperrventil 10 besteht im wesentlichen aus der in dem Gehäusegrundkörper 11 angeordneten Spindel 13, die aus einem Kunststoff gefertigt ist, dem Verstellelement 12, das ebenfalls aus einem Kunststoff gefertigt ist, dem metallischen Schließkörper 14 und einem Distanzkörper 38 aus Kunststoff. In dem Gehäusegrundkörper 11 ist einstückig mit diesem ausgebildet der Ventilsitz 39. Über das Ventil 14, 39 wird die Eingangsbohrung 40 mit der Ausgangsleitung 41 verbunden.

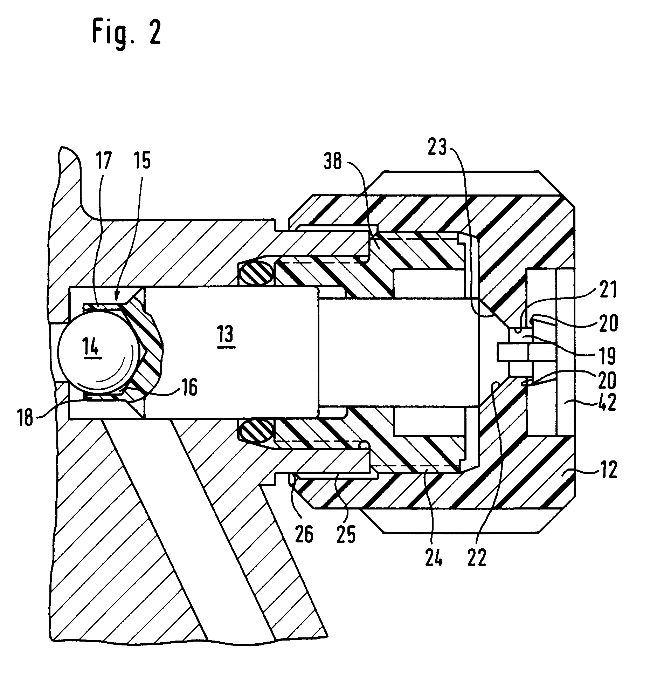

In der Fig. 2 ist die Spindel 13 mit dem Verstellelement 12 und dem Schließkörper 14 in vergrößerten Maßstab dargestellt. Die aus Kunststoff bestehende Spindel 13 weist eine elastische Aufnahme 15 auf, die aus einem Hohlraum 16, der von einer elastischen Wand 17 umgeben ist, besteht. An ihrer offenen Seite weist die Wand 17 einen nach innen gerichteten Vorsprung 18 auf. Der als Kugel ausgebildete Schließkörper 14 wird durch Dehnen der Aufnahme 15 in der Aufnahme 15 angeordnet, wobei nach der Anordnung der Kugel die Aufnahme 15 bzw. die elastische Wand 17 automatisch in die Ausgangsform zurückgeht. Da die Kugel über ihren Mittelpunkt hinaus in dem Hohlraum 16 angeordnet ist, legt sich der nach innen gerichtete Vorsprung 18 an der Oberfläche der Kugel an und verhindert, daß diese aus der Spindel 13 herausfällt.

An dem entgegengerichteten Ende der Spindel ist diese als Verbindungsteil 19 ausgebildet. Das Verbindungsteil 19 weist eine im wesentlichen zylindrische bolzenförmige Form auf, die geschlitzt ist, so daß der Umfang durch Krafteinwirkung (zusammendrücken) verkleinert werden kann und aufgrund des Werkstoffes Kunststoff bei Fortfall der Krafteinwirkung automatisch seine Ausgangslage wieder einnimmt. Am oberen Ende des Verbindungsteiles 19 sind seitlich abstehende Halteflächen 20 vorgesehen. Das Verbindungsteil 19 wird mit verkleinertem Umfang durch eine zylindrische Öffnung 21 des Verstellelementes 12 geführt. Nach dem Durchführen durch die Öffnung 21 nimmt das Verbindungsteil 19 automatisch seine Ausgangsform ein, wobei die Halteflächen 20 über dem Körper des Verstellelementes 12 angeordnet sind. Die Spindel kann nun ohne Krafteinwirkung nicht mehr von dem Verstellelement 12 entfernt werden. Über ein in dem Schlitz angeordnetes Element 42 kann das Verbindungsteil 19 nicht mehr in seinem Umfang verkleinert werden. Die Verbindung Spindel/Verstellelement ist gesichert.

Die Öffnung 21 des Verstellelementes 12 weist einen zum Schließkörper 14 hin sich öffnenden konischen Teil 22 auf, an den die Spindel 13 mit einer Gegenfläche 23 anliegt. Durch die schräge konische Auflagefläche kann eine größere Kraft ausgeübt werden.

Das Verstellelement 12 weist im wesentlichen eine topfförmige Form auf. Über eine Gewinderverbindung 24 zwischen dem Distanzkörper 38 und der Innenfläche des Verstellelementes 12 verschiebt sich dieses entlang einer Wand 25 des Gehäusegrundkörpers 11.

An der zur Wand gerichteten Seite des Verstellelementes 12 ist eine Dichtlippe 26 vorgesehen, die in Kontakt mit der Wand 25 steht und das Bewegungsgewinde 24 gegen Verschmutzung schützt.

## Patentansprüche

1. Absperrventil, insbesondere für einen Druckregler für Anlagen zur thermischen Bearbeitung von Werkstücken, mit einem Gehäusegrundkörper, einem Verstellelement und einer Spindel, die einen Schließkörper trägt,
dadurch gekennzeichnet,
daß die Spindel (13) aus einem Kunststoff und der Schließkörper (14) aus eine metallischem Werkstoff besteht.

2. Absperrventil nach Anspruch 1,
dadurch gekennzeichnet,
daß die Spindel (13) eine elastische Aufnahme (15) aufweist und der Schließkörper (14) als Kugel ausgebildet ist und durch Dehnen der Aufnahme (15) die Kugel in der Aufnahme anordenbar ist und durch automatisches Zurückgehen der Aufnahme (15) in ihre Ausgangsform die Kugel befestigbar ist.

3. Absperrventil nach Anspruch 1 oder 2,
dadurch gekennzeichnet,
daß die Aufnahme (15) einen Hohlraum (16) mit elastischer Wand (17) aufweist, in dem die Kugel über ihren Mittelpunkt hinaus anordenbar ist und die Wand (17) an der offenen Seite einen nach innen gerichteten Vorsprung (18) aufweist, der an der Oberfläche der Kugel anliegt.

4. Absperrventil nach einem der Ansprüche 1 bis 3,
dadurch gekennzeichnet,
daß die Spindel (13) ein geschlitztes elastisches Verbindungsteil (19) aufweist, daß durch Krafteinwirkung im Umfang verkleinert werden kann und ohne Krafteinwirkung automatisch seine Ausgangslage einnimmt.

5. Absperrventil nach einem der Ansprüche 1 bis 4,
dadurch gekennzeichnet,
daß das Verbindungsteil (19) an seinem freien Ende eine seitlich abstehende Haltefläche (20) aufweist.

6. Absperrventil nach einem der Ansprüche 1 bis 5,
dadurch gekennzeichnet,
daß das Verbindungsteil (19) mit verkleinertem Umfang durch eine zylindrische Öffnung (21) des Verstellelementes (12) führbar ist und nach dem Durchführen durch die Öffnung (21) die Haltefläche (20) über dem Verstellelement (12) angeordnet ist.

7.  Absperrventil nach einem der Ansprüche 1 bis 6,
    dadurch gekennzeichnet,
    daß die Öffnung (21) einen zum Schließkörper (14) sich öffnenden kohnischen Teil (22) aufweist, an dem die Spindel (13) mit einer Gegenfläche anliegt.

8.  Absperrventil nach einem der Ansprüche 1 bis 8,
    dadurch gekennzeichnet,
    daß das Verstellelement (12) einen topfförmigen Körper aufweist, der sich über eine Gewindeverbindung (24) entlang einer Wand (25) des Gehäusegrundkörpers (11) verschiebt und eine Dichtlippe (26) aufweist, die in Kontakt mit der Wand (25) des Gehäusegrundkörpers (11) steht.

# Fig. 1

## Fig. 2